# EUROPEAN PATENT APPLICATION

(11) **EP 1 869 986 A1**
(43) Date of publication of application: **26.12.2007**
(21) Application number: 06012942.6
(22) Date of filing: 23.06.2006
(51) Int. Cl.: A23L 1/236, A23L 2/60

(54) **Edible composition with low Glycemic Index and the taste of pure sucrose**

(71) Applicant: Nutrinova Nutrition Specialties & Food Ingredients GmbH, 61476 Kornberg im Taunus (DE)
(72) Inventor: Schwarz, Susanne, 65926 Frankfurt (DE); Rathjen, Susanne, Dr., 64287 Darmstadt (DE)

(57) **Abstract**

The invention relates to a food, foodstuff or edible composition comprising isomaltulose and acesulfame K or a blend of acesulfame K with one or more other High Intensity Sweetener (HIS). The invention further relates to a process for replacing a carbohydrate sweetener under retention of the sweetness and taste profile of the carbohydrate sweetener, which process comprises replacing the carbohydrate sweetener by a mixture comprising isomaltulose and acesulfame K or a blend of acesulfame K with one or more other High Intensity Sweetener (HIS). The invention also relates to a new mixture which comprises isomaltulose and a blend of acesulfame K with one or more other HIS selected from the group consisting of alitame, cyclamate, dihydrochalcone, io han go, neohesperidin, neotame, saccharin, steviosid, sucralose and thaumatin.

## Description

The present invention relates to an edible composition with a low Glycemic Index and the taste of pure sucrose. The invention also provides a process for replacing carbohydrate sweeteners under the retention of the sweetness and taste profile of the carbohydrate sweetener.

### Background of the Invention

More than one billion People are overweight worldwide, from which at least 300 million are clinically obese. Both disease patterns exhibit a major risk for chronic diseases such as type 2 diabetes, cardiovascular disease, hypertension and stroke and certain forms of cancer. Special concern is given to increasing obesity in childhood. Main factors for the cause of obesity and overweight are the increased consumption of food with a high energy-density, especially high in sugars and saturated fat and the fact that physical activity and exercise is reduced not only due to less physically demanding work but also due to increased automated transport, home technology and more passive leisure activities.

Since this is a multi factorial incidence there are several points where a change in behaviour can lead to - long term - improvements. One significant factor is the food industry which is asked to produce healthier food and/or provide healthier food additives.

More and more people pay closer attention to their daily diet and thus to the consumed food. Lifestyles are getting busier as people work more and have less time to prepare their meals. Accordingly the food industry is required to deliver not only convenient but especially healthy choices. The current trend goes to low fat, low sugar, low calorie foods. Health conscious consumers are willing to accept healthier choices but often without compromising on taste.

Along with this trend the concept of considering how much and especially which carbohydrates are beneficial in a daily diet became very popular; along with the so-called 'Low Carb Diet' focus shifted to the Glycemic Index.

The Glycemic Index (GI) is a ranking of carbohydrates on a scale from 0 to 100 according to the extent to which they raise blood sugar levels after eating. Glucose for example has a GI of 100, Sucrose a GI of 65+ and Isomaltulose a GI of 32. Foods with a high GI (>50) are those which are rapidly digested and absorbed and result in marked fluctuations in blood sugar levels. Low-GI foods (<40), by virtue of their slow digestion and absorption, produce gradual rises in blood sugar and insulin levels, and have proven beneficial for health. Low GI diets have shown to improve both glucose and lipid levels in humans with diabetes (type 1 and type 2). They have benefits in weight control because they help to control appetite and delay hunger. Low GI diets also reduce insulin levels and insulin resistance.

Recent studies from Harvard School of Public Health indicate that the risks of diseases such as type 2 diabetes and coronary heart disease are strongly related to the GI of the overall diet. In 1999, the World Health Organisation (WHO) and Food and Agriculture Organisation (FAO) recommended that people in industrialised countries base their diets on low-GI foods in order to prevent the most common diseases of affluence, such as coronary heart disease, diabetes and obesity. (www.glycemicindex.com Based in the Human Nutrition Unit, School of Molecular and Microbial Biosciences, University of Sydney) Isomaltulose is a disaccharide which has been granted approval for use in the EU in all foods according to the commission decision of July 25^{th}, 2004. In the USA Isomaltulose has GRAS status. It is composed of Glucose and Fructose. It has a clean sweet taste, but has a delayed onset of sweetness when used alone and compared to sucrose (Palatinit GmbH, Product information brochure: 'Palatinose - The better energy' February 2005).

Like most commonly used carbohydrates Isomaltulose has a caloric value of 4kcal/gram. A difference -beside the lower digestive reaction in the human body-is the relative sweetness of only 40% when compared to sucrose with a sweetness of 100%. This leads to the conclusion that Isomaltulose is a good alternative when considering new sweetening systems; on the other hand there is a disadvantage that a total replacement goes along with a significant increase in caloric content (e.g. 4-wt-% sucrose = 40g/L = 160kcal/L = 16 kcal/100ml; an equi-sweet concentration of Isomaltulose = 100g/L would deliver 400 kcal/L = 40 kcal/100ml which is 2,5times higher than with Sucrose alone).

High Intensity Sweeteners (HIS) are synthetic or natural substances which have no or virtually no calories and a sweetness potency several times higher than sugar. HIS or blends of different HIS are used in food and beverage applications to sweeten products without the addition of calories. Commonly used HIS are acesulfame K, alitame, aspartame, cyclamate, lo han go, neohesperidin dihydrochalcone, neotame, saccharin, stevioside and sucralose.

Yet, no high-intensity sweetener matches the taste profile of sugar completely when used alone. They differ in characteristics such as sweetness profile, side taste, lack of mouthfeel and off-taste characteristics. Proper blending of different high intensity sweeteners is known to overcome part of the taste limitations of single high-intensity sweeteners. But even if a more sugar-like sweetness profile is achieved in products with high-intensity sweeteners only, they still can be distinguished sensorically from their counterparts with just sucrose by lack of mouthfeel and reduced flavour characteristics. Sucrose is still and after all the 'golden standard' and it remains an objective to provide a HIS combination which matches sucrose in all aspects.

It has also been proposed to partly replace sucrose in food with HIS. Fry (Sugar replacement in non-diet soft drinks, Food Technology International Europe, 83-86, 1995) describes the effect of reducing the carbohydrate content by 30 resp. 50 % in lemonade and cola beverages. The sweetening compositions in Fry are combinations of either glucose syrup and aspartame or low-fructose syrups and aspartame. Using a consumer panel it was shown that the taste profile of none of these sweetening systems was similar to sucrose. In fact the glucose syrup/aspartame and low-fructose syrup/aspartame mixtures showed statistically significant differences in sweetness, acidity, sweet aftertaste, bitter aftertaste, length of aftertaste, liking for aftertaste, mouthfeel, odour liking, flavour liking and overall liking.

EP-A 1656040 describes the effect that mixtures of high fructose corn syrup (HFCS 42 or 55) and HIS create a taste profile of sucrose. These mixtures have a carbohydrate content of about 30-50 wt.-% based on the standard which is set at 100 wt.-% sucrose. Yet, also these mixtures still exhibit a relatively high glycemic index.

EP-A 1 214 093 and EP-A 1 213 974 disclose compressable compositions for tablets which may contain isomaltulose and a HIS-mixture in a ration of about 300:1 (wt:wt). None of these documents mentions the use of these mixtures in food, let alone any taste profile improvement, sucrose replacement or effect on the glycemic index.

It was therefore an objective of the present invention, to provide a food, foodstuff or edible composition with a reduced carbohydrate sweetener content while retaining the sweetness and taste profile of the replaced carbohydrate sweetener. At the same time said food, foodstuff or edible composition provides a low Glycemic Index and thus serves the demand of a healthy choice with good/premium taste.

It was a further object of the present invention to provide a process for replacing carbohydrate sweeteners under the retention of the sweetness and taste profile of the carbohydrate sweetener.

It was another object of the present invention to provide a composition with a low Glycemic Index, a sweetness power of at least that of sucrose and a taste profile of sucrose while at the same time providing no or only few calories which combination serves the demand of a healthy choice with good/premium taste.

### Brief description/Summary of the invention

Thus, in one aspect of the invention a food, foodstuff or edible composition is provided which comprises a composition with a taste profile of sucrose and a Glycemic Index of ≤40 which composition is composed of
a) isomaltulose and
b) acesulfame K or a blend of acesulfame K with one or more other HIS.

In another aspect of the invention a method is provided for replacing a carbohydrate sweetener under retention of the sweetness and taste profile of the carbohydrate sweetener, which process comprises replacing the carbohydrate sweetener by a mixture of
a) isomaltulose and
b) acesulfame K or a blend of acesulfame K with one or more other HIS.

In a further aspect of the invention a composition is provided for food with a taste profile of sucrose (=standard=40 wt.-%), and a low Glycemic Index of ≤40 which is composed of
a) isomaltulose and
b) a blend of acesulfame K with one or more other HIS selected from the group consisting of alitame, cyclamate, dihydrochalcone, io han go, neohesperidin, neotame, saccharin, steviosid, sucralose, thaumatin.

### Detailed description of the invention

Isomaltulose a low glycemic carbohydrate has a different taste profile than pure sucrose. Certain combinations of isomaltulose with HIS surprisingly reveal a taste profile which is not significantly different to sucrose.

It was surprising that a combination of the low glycemic carbohydrate source Isomaltulose with a single HIS but also with combinations of HIS reached excellent taste quality in comparison to a fully sugared version. No significant differences towards an only sucrose sweetened version were observed by an expert sensory panel.

The weight ratios of carbohydrate to HIS in these compositions are preferably 10:1 to 1000:1 (w/w carbohydrate:HIS) more preferably 20:1 to 750:1 and most preferably 30:1 to 500:1.

The HIS may be a single HIS, e.g. acesulfame K, alitame, aspartame, cyclamate, dihydrochalcone, io han go, neohesperidin, neotame, saccharin, steviosid, sucralose, thaumatin, etc. or a combination of two or more HIS, e.g. acesulfame K/aspartame or acesulfame K/sucralose, which are preferred HIS combinations. If used in combination the weight ratio of the preferred sweetener combination is, acesulfame K/aspartame 20/80 to 70/30 (w/w) preferably 25/75 to 60/40 (w/w) respectively acesulfame K/sucralose 25/75 to 95/5 (w/w) preferably 50/50 to 90/10 (w/w).

The mixtures may also contain minor amounts, i.e. up to 10 wt.-%, preferably up to 5 wt.-% of commonly used additives such as flavours, bulking agents weighting agents etc.

The food, foodstuff or edible composition according to the invention contains the above composition in amounts typical for the food, foodstuff or edible composition.

The compositions in accordance with the invention can be prepared by any conventional mixing method, e.g. by simply mixing the carbohydrate isomaltulose and HIS such as acesulfame K, aspartame, sucralose, saccharin, cyclamate, neotame, thaumatin, steviosid etc. The mixing process employed may be any suitable mixing technique known in the food industry. The mixing may be carried out with dry products or with solutions of said products, or combinations thereof. These sweetener compositions may then be incorporated directly into foods, foodstuffs or edible compositions, using techniques known in the art. Likewise, the components of this mixture may be separately added to the food, foodstuff or edible composition. These compositions may contain the compositions in any conventional particle size.

Food, foodstuff and edible compositions according to the invention are soft drinks, flavoured/near water, sports drinks, hypertonic and hypotonic beverages, energy drinks, isotonic beverages, fruit juice based beverages, beverage dry mixes, dairy products, syrups or dilutables, hot drinks like tea and coffee, milk and dairy type drinks, including fermented products, delicacies such as soups, sauces or dressings either as ready to eat or as instant product.

Further categories are pudding mixes; desserts, cake mixes, cereals, cereal bars, baked goods, chewing gums, confectioneries, table top sweetener products. No food, food stuff or edible composition according to the present invention are: pharmaceutical compositions such as compressable tablets, capsules and the like.

### This invention will now be illustrated by the following, non limiting, examples:

### Examples

### Methodology

Basis for the development was a sensory analysis which was carried out in flavoured water type beverages. All considered sweetening systems were set at 4% (weight) sucrose equivalence via sensorical adjustment to the sucrose standard.

A sensory panel of experts, especially trained to evaluate sweet products, from an independent experienced sensorial testing institute worked out the flavour specific sensory attributes for a subsequent quantitative descriptive analysis. This was performed by 12 panellists, in individual tasting booths using a scale from 0-100 describing the specific value for each attribute in comparison to the sucrose standard. Samples were presented randomly with a 3 digit coded number also following random principles.

Each panellist assessed the samples three times, these replications also following no order.

### Comparative Example 1: 4wt.-% sucrose vs. acesulfame K: 40g/l sucrose versus 0,215g/l acesulfame K, in a lemon lime flavoured water beverage. Beverage System: commercially available lemon lime flavour (Döhler 514493) in the manufacturer recommended amount, 1,25 g/l citric acid mono hydrate

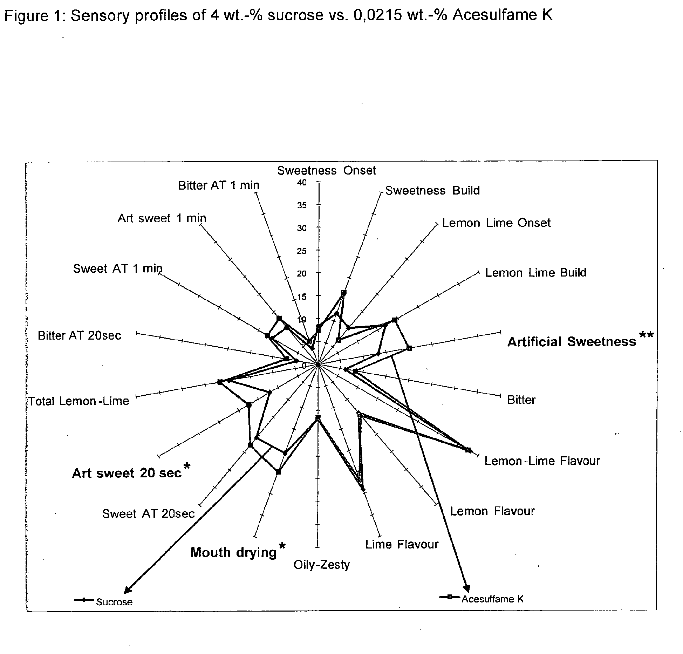

The sensory profiles of the flavoured water beverage with 4wt.-% sucrose sweetened against the beverage with the same flavour system but only containing acesulfame K are shown in Figure 1. The statistically observed differences are demonstrated by highlighting the respective attributes with following superscript notes:
* significantly different at 90% confidence level
* *significantly different at 95% confidence level
* ** significantly different at 99% confidence level

Figure 1: Sensory profiles of 4 wt.-% sucrose vs. 0,0215 wt.-% Acesulfame K.

### Example 1: 4wt.-% sucrose vs. isomaltulose/acesulfame K: 40g/l sucrose versus 31g/l isomaltulose and 0,148g/l acesulfame K in a lemon lime flavoured water beverage. Beverage System: commercially available lemon lime flavour (Döhler 514493) in the manufacturer recommended amount, 1,25 g/l citric acid mono hydrate.

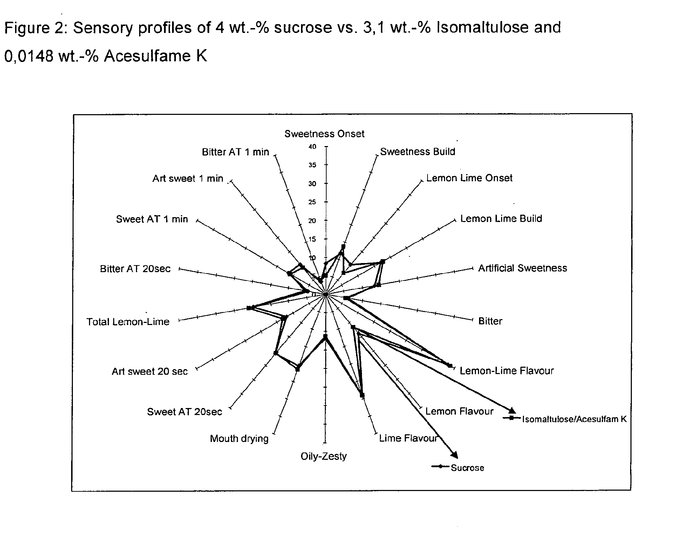

The sensory profiles of the flavoured water beverage with 4wt.-% sucrose sweetened and the beverage with the same flavour system but containing a blend of Isomaltulose and acesulfame K are shown in Figure 2. No statistical differences were observed.

Figure 2: Sensory profiles of 4 wt.-% sucrose vs. 3,1 wt.-% isomaltulose and 0,0148 wt.-% acesulfame K.

### Example 2: 4wt.-% sucrose vs. isomaltulose/acesulfame K/sucralose: 40g/l sucrose versus 15g/l isomaltulose and 0,039g/l acesulfam K and 0,028g/l sucralose in a lemon lime flavoured water beverage. Beverage System: commercially available lemon lime flavour (Döhler 514493) in the manufacturer recommended amount, 1,25 g/l citric acid mono hydrate.

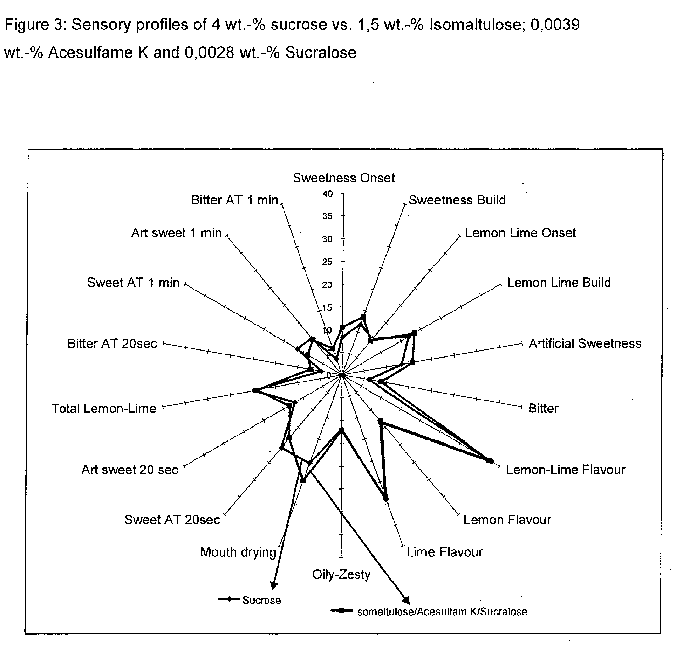

The sensory profiles of the flavoured water beverage with 4wt.-% sucrose sweetened and the beverage with the same flavour system but containing a blend of isomaltulose and acesulfame K are shown in Figure 3. No statistical differences were observed.

Figure 3: Sensory profiles of 4 wt.-% sucrose vs. 1,5 wt.-% isomaltulose; 0,0039 wt.-% acesulfame K and 0,0028 wt.-% sucralose.

## Claims

1. A food, foodstuff or edible composition comprising:
a) isomaltulose and
b) acesulfame K or a blend of acesulfame K with one or more other High Intensity Sweetener (HIS).

2. The food, foodstuff or edible composition as claimed in claim 1, wherein the High Intensity Sweetener comprises a binary mixture of acesulfame K and one compound selected from the group consisting of: alitame, aspartame, cyclamate, lo han go, neohesperidin dihydrochalcone, neotame, saccharin, stevioside and sucralose

3. The food, foodstuff or edible composition as claimed in claim 1, wherein the High Intensity Sweetener comprises a ternary mixture of acesulfame K and two compounds selected from the group consisting of: alitame, aspartame, cyclamate, lo han go, neohesperidin dihydrochalcone, neotame, saccharin, stevioside and sucralose

4. The food, foodstuff or edible composition as claimed in claim 1, wherein the High Intensity Sweetener comprises a four way mixture of acesulfame K and three compounds selected from the group consisting of: alitame, aspartame, cyclamate, lo han go, neohesperidin dihydrochalcone, neotame, saccharin, stevioside and sucralose

5. The food, foodstuff or edible composition as claimed in claim 2, wherein the group consists of aspartame and sucralose.

6. The food, foodstuff or edible composition according to claim 5, wherein the ratio of acesulfame K/aspartame is 20/80 to 70/30 (w/w) and the ratio of acesulfame K/sucralose is 25/75 to 95/5 (w/w).

7. The food, foodstuff or edible composition according to any one of claims 1 to 6, wherein the weight ratio of isomaltulose to High Intensity Sweetener or Sweeteners is 10:1 to 1000:1.

8. The food, foodstuff or edible composition according to any one of claims 1 to 7, which is a beverage and which has a GI of ≤40.

9. A process for replacing a carbohydrate sweetener under retention of the sweetness and taste profile of the carbohydrate sweetener, which process comprises replacing the carbohydrate sweetener by a mixture comprising
a) isomaltulose and
b) acesulfame K or a blend of acesulfame K with one or more other High Intensity Sweetener (HIS).

10. A mixture which comprises:
a) isomaltulose and
b) a blend of acesulfame K with one or more other HIS selected from the group consisting of alitame, cyclamate, dihydrochalcone, io han go, neohesperidin, neotame, saccharin, steviosid, sucralose and thaumatin.

11. A mixture according to claim 10, having a Glycemic Index of ≤ 40.
